# EUROPEAN PATENT APPLICATION

(11) **EP 4 834 734 A1**
(43) Date of publication of application: **04.11.2026**
(21) Application number: 24911936.3
(22) Date of filing: 17.10.2024
(51) Int. Cl.: B62D 49/00, B60K 8/00, B60K 15/01, B60K 15/07, B60K 15/063, H01M 8/00, H01M 8/04

(54) **WORK VEHICLE**

(30) Priority: 26.12.2023 JP 2023219165; 26.12.2023 JP 2023219236
(71) Applicant: KUBOTA CORPORATION, Osaka-shi, Osaka 530-0011 (JP)
(72) Inventor: HORIIKE, Kohei, Sakai-shi, Osaka 590-0908 (JP)
(74) Representative: Cabinet Beau de Loménie
(86) International application number: PCT/JP2024/036991
(87) International publication number: WO 2025/142043

(57) **Abstract**

A work vehicle includes a vehicle body, a fuel cell mounted on the vehicle body, a tank that stores fuel to be supplied to the fuel cell, a supply pipe connected to the tank and for supplying fuel to the tank, and a frame attached with the tank and the supply pipe and detachable from the vehicle body.

## Description

### TECHNICAL FIELD

The present disclosure relates to a work vehicle driven by a fuel cell. The present application claims priority based on Japanese Patent Application No. 2023-219236 and Japanese Patent Application No. 2023-219165 filed on December 26, 2023, the entire contents of which are incorporated herein by reference.

### BACKGROUND ART

There has been proposed a work vehicle such as a tractor that uses a fuel cell that generates power by hydrogen gas instead of an internal combustion engine using fossil fuel from the viewpoint of protecting the global environment, and operates a traveling device and a working device by an electric motor driven by the generated power (see PATENT LITERATURE 1). The work vehicle includes a tank that stores hydrogen gas. The tank is housed inside a ceiling of a cabin surrounding a driver's seat. A pipe through which hydrogen gas flows to the tank, a pipe through which hydrogen gas flows from the tank to the fuel cell, and the like are connected to the tank.

### CITATION LIST

### [PATENT LITERATURE]

PATENT LITERATURE 1: Japanese Laid-Open Patent Publication No. 2023-13186

### SUMMARY OF THE INVENTION

A work vehicle according to the present disclosure includes:
a vehicle body;
a fuel cell mounted on the vehicle body;
a tank that stores fuel to be supplied to the fuel cell;
a supply pipe connected to the tank and for supplying fuel to the tank; and
a frame attached with the tank and the supply pipe and detachable from the vehicle body.

### BRIEF DESCRIPTION OF DRAWINGS

[FIG. 1] FIG. 1 is a perspective view of a work vehicle according to an embodiment in Chapter 1.
[FIG. 2] FIG. 2 is a front view of the work vehicle.
[FIG. 3] FIG. 3 is a rear view of the work vehicle.
[FIG. 4] FIG. 4 is a right side view of the work vehicle.
[FIG. 5] FIG. 5 is a left side view of the work vehicle.
[FIG. 6] FIG. 6 is a plan view of the work vehicle.
[FIG. 7] FIG. 7 is a perspective view illustrating an example of an internal structure of the work vehicle.
[FIG. 8] FIG. 8 is a perspective view illustrating a periphery of a filling port of the work vehicle.
[FIG. 9] FIG. 9 is a block diagram illustrating an example of a functional configuration of the work vehicle.
[FIG. 10] FIG. 10 is a left side view illustrating a state in which a tank and the filling port are removed.
[FIG. 11] FIG. 11 is a left side view illustrating a state in which the tank and the filling port are removed and mounted on a platform.
[FIG. 12] FIG. 12 is a perspective view of the work vehicle according to an embodiment in Chapter 2.
[FIG. 13] FIG. 13 is a right side view of the work vehicle from which a part of exterior components is removed.
[FIG. 14] FIG. 14 is a perspective view illustrating an example of the internal structure of the work vehicle.
[FIG. 15] FIG. 15 is a left side view of the work vehicle from which rear wheels are removed.
[FIG. 16] FIG. 16 is a perspective view of a rear portion of a vehicle body of the work vehicle from which the rear wheels are removed.
[FIG. 17] FIG. 17 is an explanatory view illustrating an example of mechanical characteristics of a support mechanism.

### DETAILED DESCRIPTION

Hereinafter, preferred embodiments of the present disclosure will be described separately as "Chapter 1" and "Chapter 2".

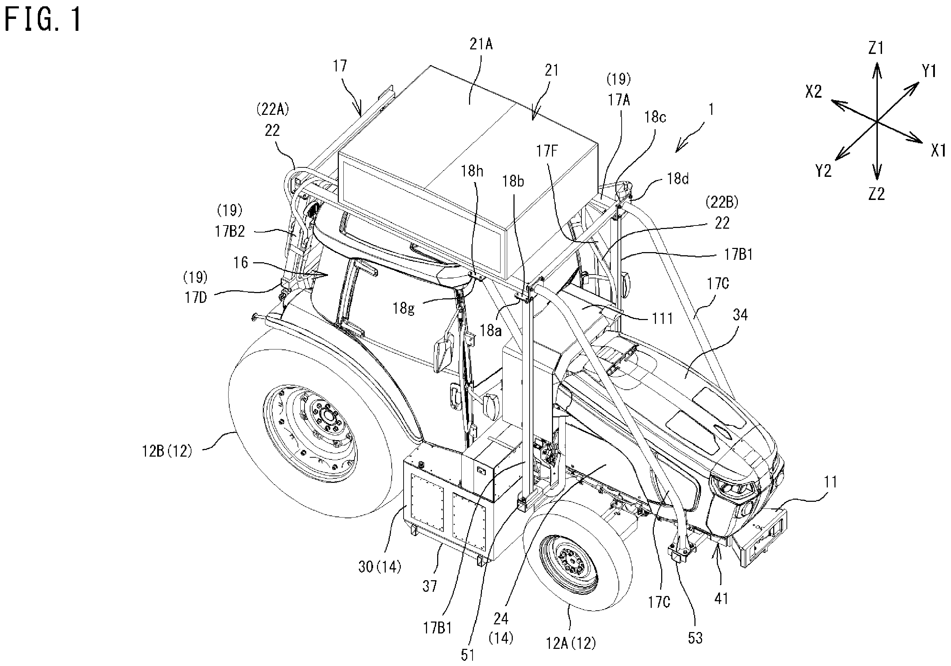

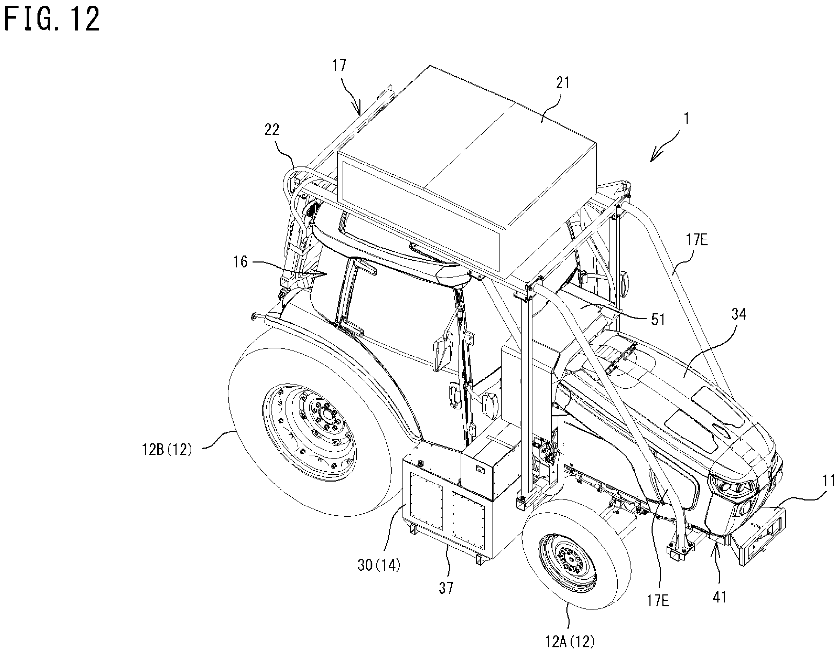

In particular, an embodiment in Chapter 1 will be described with reference to FIG. 1 to FIG. 11, and an embodiment in Chapter 2 will be described with reference to FIG. 12 to FIG. 17.

### <Chapter 1>

### [Problems to be solved by the present disclosure]

A tank for storing hydrogen gas may need to be removed for maintenance or replacement. However, since an accessory such as a pipe is connected to the tank, removal work is complicated.

An object of the present disclosure in Chapter 1 is to provide a work vehicle that allows for easy removal of the tank.

### [Effects of the present disclosure]

According to the present disclosure in Chapter 1, it is possible to provide the work vehicle that allows for easy removal of the tank.

### [Outline of embodiment of the present disclosure]

Hereinafter, an outline of an embodiment of the present disclosure in Chapter 1 will be listed and described.
(1) A work vehicle according to the present embodiment includes:
   a vehicle body;
   a fuel cell mounted on the vehicle body;
   a tank that stores fuel to be supplied to the fuel cell;
   a supply pipe connected to the tank and for supplying fuel to the tank; and
   a frame attached with the tank and the supply pipe and detachable from the vehicle body.

According to the above configuration, the tank and the supply pipe can be integrally removed from the vehicle body by removing the frame from the vehicle body. Therefore, the removal work of the tank can be easily performed.

(2) The work vehicle according to the above (1) includes a filling port detachable from the vehicle body together with the frame.

According to this configuration, the filling port can also be removed from the vehicle body together with the tank.

(3) The work vehicle according to the above (1) or (2) includes a valve connected to the supply pipe or the tank and detachable from the vehicle body together with the frame.

According to this configuration, the valve can also be removed from the vehicle body together with the tank.

(4) The work vehicle according to any one of the above (1) to (3) includes a case that houses the tank and is detachable from the vehicle body together with the frame.

According to this configuration, the tank can be removed from the vehicle body together with the case that houses the tank.

(5) The work vehicle according to any one of the above (1) to (4) includes a driver's seat on the vehicle body, in which the frame disposes the tank above the driver's seat.

According to this configuration, the tank can be easily removed upward together with the frame.

### [Details of embodiment of the present disclosure]

Hereinafter, the embodiment of the present disclosure in Chapter 1 will be described in detail with reference to the drawings. Note that at least a part of components of the embodiment described below in Chapter 1 may be arbitrarily combined.

### (Overall structure of work vehicle)

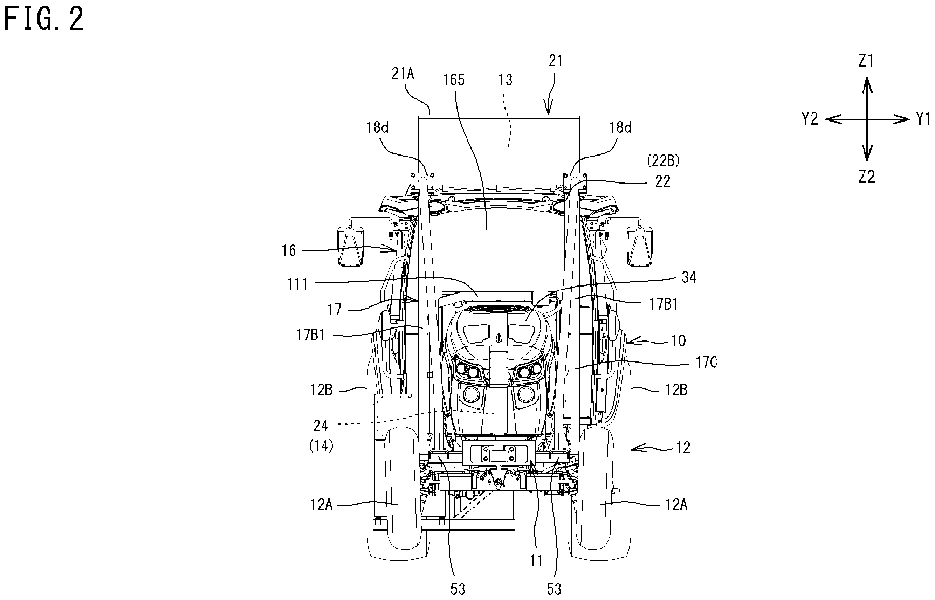

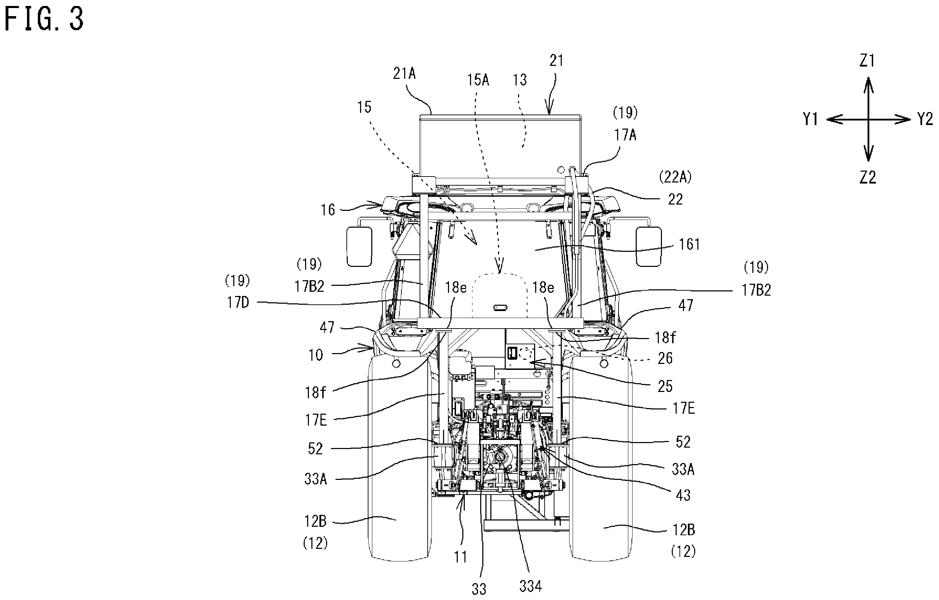

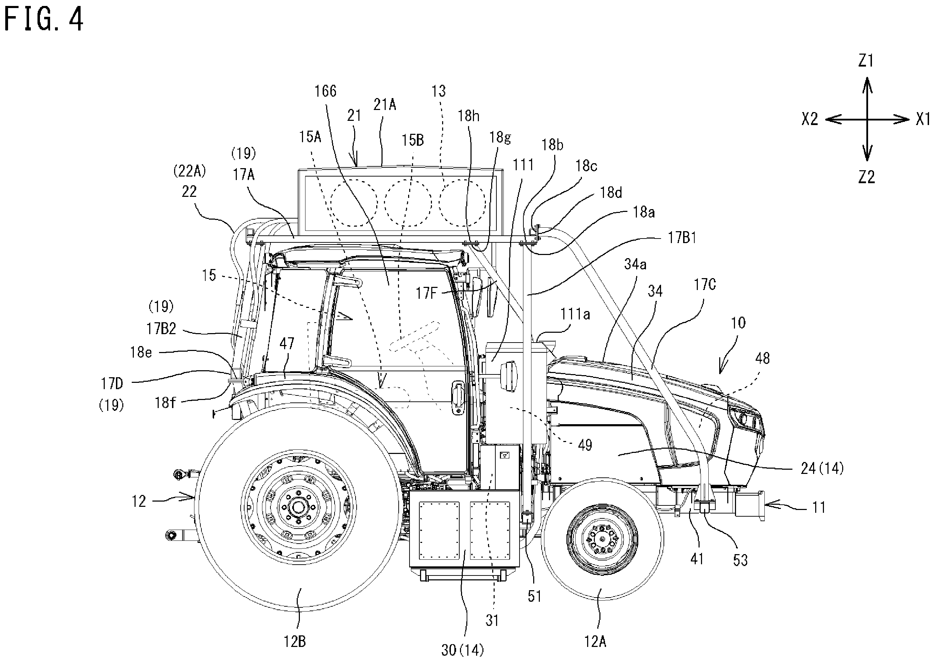

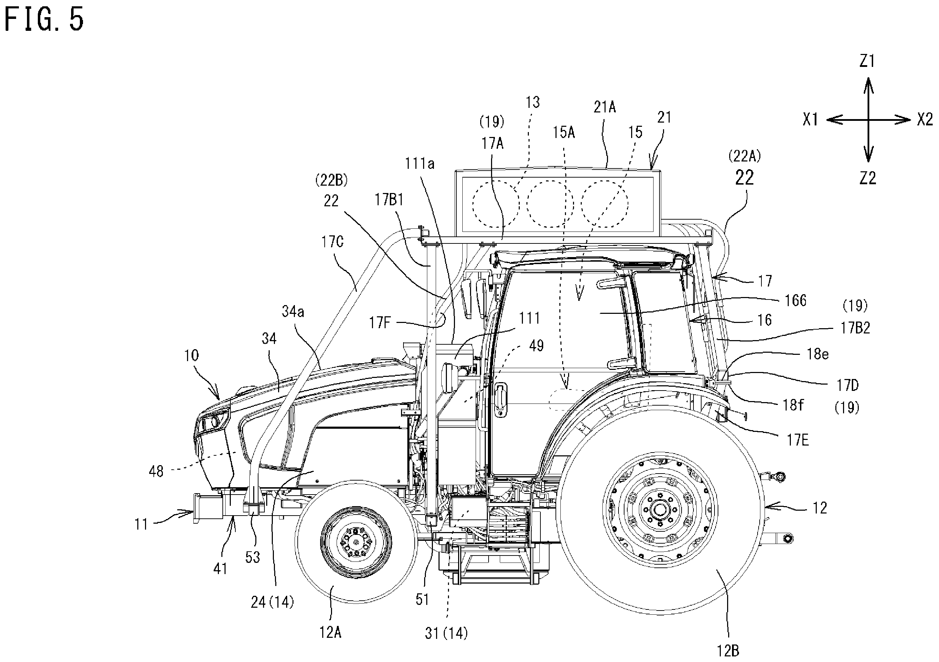

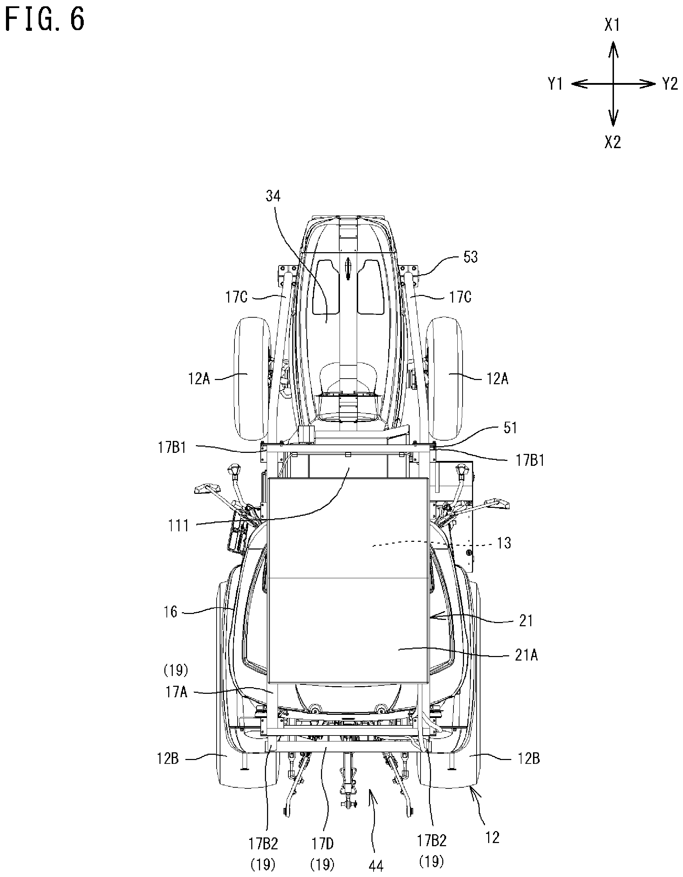

FIG. 1 is a perspective view of the work vehicle according to the embodiment in Chapter 1. FIG. 2 is a front view of the work vehicle. FIG. 3 is a rear view of the work vehicle. FIG. 4 is a right side view of the work vehicle. FIG. 5 is a left side view of the work vehicle. FIG. 6 is a plan view of the work vehicle. Note that in the present specification, a direction in which a work vehicle 1 moves forward is defined as front, a direction in which the work vehicle 1 moves rearward is defined as rear, a left side of the work vehicle 1 facing forward is defined as left, and a right side of the work vehicle 1 facing forward is defined as right. In FIG. 2 to FIG. 7, front, rear, left, right, upper, and lower directions are respectively indicated by arrows X1, X2, Y1, Y2, Z1, and Z2.

As illustrated in FIG. 1 to FIG. 6, the work vehicle 1 is a vehicle used for farmwork, specifically, a tractor. However, the work vehicle 1 is not limited to the tractor, and may be a moving vehicle such as an agricultural machine, a construction machine, or a utility vehicle.

The work vehicle 1 includes a vehicle body 11, a traveling device 12 that supports the vehicle body 11, a driver's seat 15, a cabin 16, and the like. The vehicle body 11 includes a chassis 41, a hood 34, a cover 111, the cabin 16, a fender 47 for a rear wheel 12B, and the like. The hood 34 and the cover 111 are mounted on the chassis 41 of the vehicle body 11 in order from a front portion to a rear portion, and a cabin 16 is disposed behind the cover 111. The hood 34, the cover 111, and the cabin 16 all function as covers for covering devices (a fuel cell 24, radiators 48 and 49, a seat 15A, and the like described later) mounted on the vehicle body 11.

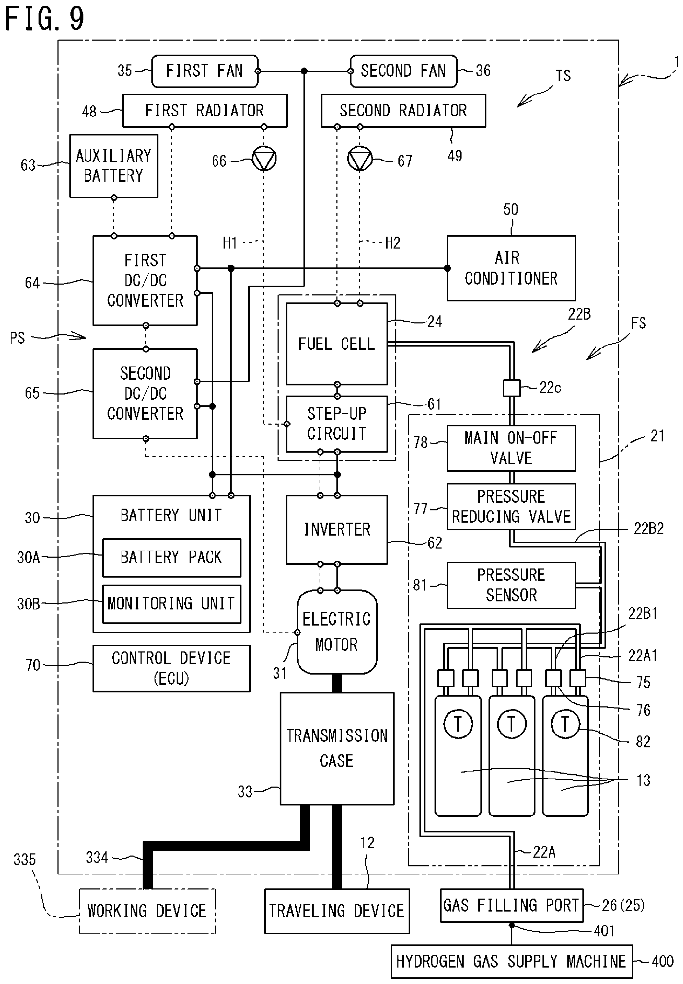

The work vehicle 1 further includes a tank unit 21 having a plurality of tanks 13 (see FIG. 4) for storing fuel, and a drive device 14 driven by the stored fuel. The tank unit 21 includes a rectangular parallelepiped case 21A having a length (height) in a vertical direction smaller than a length in front-rear and left-right directions, and the plurality of tanks 13 are housed side by side in a case 21A. The tank unit 21 includes various valves 75 to 78 and sensors 81 and 82 (see FIG. 9). The tank unit 21 is disposed above the driver's seat 15 and the cabin 16 by a mounting frame 17.

The fuel is liquid or gas, and is hydrogen, methane, carbon monoxide (CO), or the like. In this embodiment, the tank 13 stores hydrogen gas. Therefore, the work vehicle 1 is a fuel cell vehicle (FCV), and travels using electric power generated by a chemical reaction between hydrogen and oxygen by the fuel cell 24 as an energy source. The fuel cell 24 generates electric power by hydrogen. The fuel cell 24 may generate electric power by methane or carbon monoxide (CO).

The drive device 14 includes the fuel cell 24, a battery unit 30, and an electric motor 31 (see FIG. 3: hereinafter, also referred to as "motor 31"). The battery unit 30 incorporates at least one battery pack 30A (see FIG. 9) that stores output power of the fuel cell 24.

As illustrated in FIG. 3, the work vehicle 1 includes a pipe 22 and a filling unit 25. In this embodiment, the pipe 22 allows hydrogen gas to pass therethrough. Note that the pipe 22 may be a pipe through which methane or carbon monoxide (CO) passes. The filling unit 25 has a filling port (receptacle; hereinafter, also simply referred to as a "filling port") 26 to which a filling nozzle 401 is connected. The filling port 26 is filled with hydrogen gas from the filling nozzle 401. Note that the filling port 26 may be filled with methane or carbon monoxide (CO) from the filling nozzle 401. In this embodiment, the filling unit 25 is filled with hydrogen gas at the filling port (gas filling port) 26 from a hydrogen gas supply machine (fuel supply machine) 400 (see FIG. 9) such as a gas station that is separate from the work vehicle 1. The hydrogen gas is supplied to the tank 13 through the pipe 22 (22A). The hydrogen gas in the tank 13 is supplied to the fuel cell 24 through the pipe 22 (22B). Specific configurations of the filling unit 25 and the pipe 22 will be described later.

The cabin 16 is a partitioned driver's cabin having front pillars, rear pillars, and a roof, and surrounds the driver's seat 15. The driver's seat 15 includes a seat 15A and an operation device 15B. The operation device 15B includes a steering wheel, a lever, a meter, and the like. The front pillars of the cabin 16 are arranged on left and right sides in front of the driver's seat 15, and the rear pillars are arranged on the left and right sides behind the driver's seat 15. The cabin 16 includes a front panel 165 (see FIG. 2) between left and right front pillars, a rear panel 161 (see FIG. 3) between left and right rear pillars, and side panels 166 between the front pillars and the rear pillars. The side panel 166 includes an openable and closable door. The front panel 165, the rear panel 161, and the side panel 166 are formed of a transparent material such as glass or a synthetic resin material, and allow an outside of the cabin 16 to be visually recognized from an inside and the inside from the outside. The work vehicle 1 may have a canopy or a rollover protective structure (ROPS) instead of the cabin 16.

The traveling device 12 includes front wheels 12A and rear wheels 12B. These are all arranged bilaterally symmetrically with respect to the vehicle body 11. One or both of the front wheel 12A and the rear wheel 12B are rotated by power of the motor 31. One or both (drive wheels) of the wheels 12A and 12B rotated by the power of the motor 31 may be crawlers (caterpillars). An upper portion and a front portion of the rear wheel 12B are covered with the fender 47.

As illustrated in FIG. 4 and FIG. 5, a first radiator 48, a fuel cell 24, and a second radiator 49 are mounted on a portion of the chassis 41 corresponding to the front wheel 12A in order from a front side to a rear side. The first radiator 48 and the fuel cell 24 are covered with the hood (cover) 34, and the second radiator 49 is covered with the cover 111.

As illustrated in FIG. 4, an upper surface 111a of the cover 111 is higher than an uppermost end of the hood 34, but lower than an uppermost end of a steering wheel 15B of the driver's seat 15. A rear end portion of the hood 34 is located lower than the cover 111, and an upper surface 34a of the hood 34 is formed in a tapered shape gradually being lowered from the rear end portion toward a front end portion thereof. Therefore, a forward visibility from an operator sitting on the driver's seat 15 is not easily obstructed.

### (Internal structure of work vehicle)

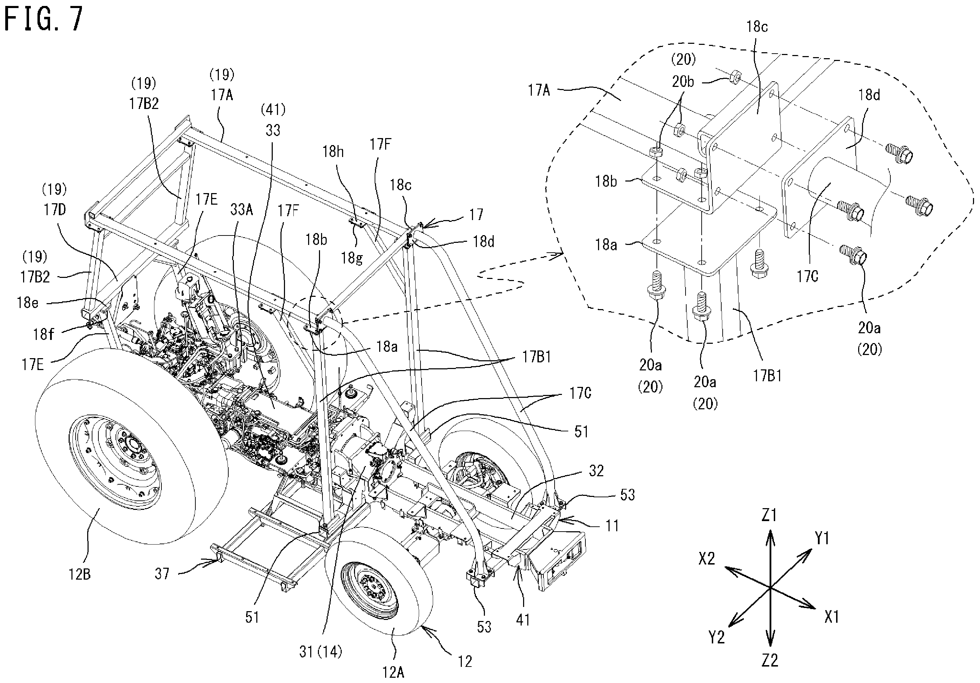

FIG. 7 is a perspective view illustrating an example of an internal structure of the work vehicle.

As illustrated in FIG. 7, the chassis 41 constituting the vehicle body 11 is formed of a steel frame having a shape elongated in a front-rear direction, and includes a front frame 32 and a transmission case 33.

The transmission case 33 is connected to a rear portion of the front frame 32, and a framework of the vehicle body 11 is formed by the transmission case 33 and the front frame 32.

A mounting frame 17 for disposing the tank unit 21 above the cabin 16 is connected to the chassis 41. The mounting frame 17 includes a ceiling frame 17A having a substantially rectangular shape in which the front-rear direction is longer than the left-right direction, a plurality of pillars 17B1 and 17B2 supporting the ceiling frame 17A from below, and a pair of left and right reinforcing frames 17C connected to a front end portion of the ceiling frame 17A. In addition, the mounting frame 17 includes a base frame 17D to which lower ends of left and right pillars 17B2 on the rear side are connected, and a pair of left and right lower frames 17E extending downward from the base frame 17D. The base frame 17D is disposed substantially horizontally and extends in the left-right direction.

As illustrated in FIG. 1, the tank unit 21 is placed and connected to the ceiling frame 17A. The ceiling frame 17A is positioned higher than the roof of the cabin 16. Accordingly, the tank unit 21 is disposed above the roof of the cabin 16.

The reinforcing frame 17C is a reinforcing diagonal member inclined downward from the front end portion of the ceiling frame 17A to the front frame 32. Therefore, rigidity in the front-rear direction of the mounting frame 17 is improved as compared with a case where the ceiling frame 17A and the tank unit 21 are supported only by the pillars 17B1 and 17B2. A detailed structure of the mounting frame 17 will be described later.

As illustrated in FIG. 1 and FIG. 7, a support frame 37 for supporting the battery unit 30 on the vehicle body 11 is connected to the chassis 41 of the work vehicle 1.

Specifically, the motor 31 is mounted on the front frame 32 of the chassis 41, and the support frame 37 is attached to a portion of the front frame 32 corresponding to the motor 31. The support frame 37 is made of, for example, a metal frame member, and is attached in a cantilevered state so as to protrude rightward from the front frame 32.

The transmission case 33 located behind the motor 31 has a power transmission mechanism therein. The power transmission mechanism includes a transmission, a clutch, and a differential gear, and decelerates or accelerates rotation of an output shaft of the motor 31 to transmit the rotation to the traveling device 12.

The power transmission mechanism inside the transmission case 33 includes a branch mechanism that outputs a part of the power of the motor 31 to a PTO shaft 334 (see FIG. 3 and FIG. 9). The PTO shaft 334 is an output shaft protruding rearward from the transmission case 33.

A coupling device 44 (see FIG. 6) configured by, for example, a three-point link mechanism for coupling a working device 335 (see FIG. 9, also referred to as "implement") for performing a desired farmwork to a rear of the vehicle body 11 is attached to the transmission case 33. The working device 335 is, for example, a cultivator, a baler, or the like.

Rotational movement of the PTO shaft 334 is transmitted to an input shaft of the working device 335 coupled to the coupling device 44, for example, during driving of the traveling device 12. Therefore, the work vehicle 1 can drive the working device 335 by the power of the motor 31 while traveling in a field or the like.

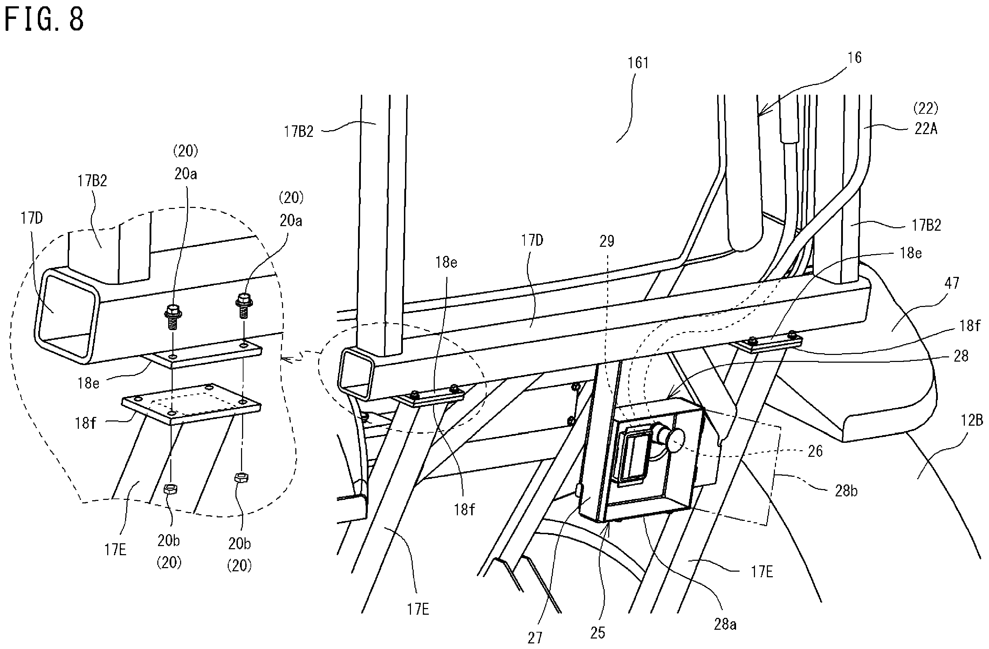

FIG. 8 is a perspective view illustrating a periphery of the filling port of the work vehicle.

The work vehicle 1 of the present embodiment includes the filling unit 25. The filling unit 25 is disposed on a rear surface of the work vehicle 1 (vehicle body 11). The filling unit 25 includes the filling port 26 and a housing 28 that houses the filling port 26. The filling port 26 faces rearward, and the filling nozzle 401 of the hydrogen gas supply machine 400 is inserted from the rear. The housing 28 includes a case 28a and a lid 28b. The case 28a has walls at the top, bottom, left, right, and front, and opens to the rear. The lid 28b is openable and closable, and can close an opening of the case 28a. The pipe 22 is connected to the filling unit 25 (filling port 26) from the front of the housing 28.

With this configuration, the filling port 26 is protected by the housing 28. The pipe 22A is connected to the filling unit 25 from a space formed between the housing 28 and a rear portion of the vehicle body 11. A connection portion 29 between the pipe 22A and the housing 28 is not exposed to a wide space behind the vehicle, and the connection portion 29 is protected.

The filling unit 25 is located behind the cabin 16 and between the rear wheels 12B on both sides in the left-right direction. The filling unit 25 is protected from the left and right directions by the rear wheels 12B and is protected from the front by the cabin 16.

The filling unit 25 is disposed below the base frame 17D of the mounting frame 17. Each of the filling units 25 is supported by the base frame 17D via a bracket (mounting member) 27. The bracket is a plate-shaped member extending downward from the base frame 17D. The filling unit 25 is protected from above by the base frame 17D. The filling unit 25 is disposed between the left and right lower frames 17E.

### (Functional configuration of work vehicle)

FIG. 9 is a block diagram illustrating an example of a functional configuration of the work vehicle.

As illustrated in FIG. 9, a functional system of the work vehicle 1 includes a fuel system FS, a power system PS, and a temperature control system TS.

Components of the fuel system FS include the tank unit 21. The tank unit 21 includes at least one tank (hydrogen tank) 13, the valves 75 to 78, the sensors 81 and 82, and the like. Components of the temperature control system TS include a plurality of radiators 48 and 49, an air conditioner 50, and the like. Components of the power system PS include the fuel cell 24, a step-up circuit 61, an inverter 62, the motor 31, the transmission case 33, DC/DC converters 64 and 65, the battery unit 30, and the like.

The work vehicle 1 of the present embodiment includes the plurality of tanks 13, for example, three tanks 13. Each tank 13 is connected to the pipes 22A and 22B. The pipe (supply pipe) 22A is a gas pipe connecting the filling port 26 and each tank 13. The hydrogen gas is introduced into the filling port 26 from the hydrogen gas supply machine 400 at a gas station or the like. The pipe 22A guides the hydrogen gas introduced into the filling port 26 to each tank 13.

The filling port 26 is connected to one end (upstream end) of the pipe 22A. The other end portion (a downstream end portion) of the pipe 22A is branched into a plurality of portions. The number of these branch portions 22A1 provided is the same as the number of the tanks 13 (three in an illustrated example). The other end (downstream end) of each branch portion 22A1 is connected to the tank 13. Therefore, the hydrogen gas introduced from the filling port 26 flows through the pipe 22A, is branched at the branch portion 22A1, and then is filled in each tank 13.

The branch portion 22A1 is provided with a check valve 75. The check valve 75 prevents the hydrogen gas in the tank 13 from flowing back to the pipe 22A via the branch portion 22A1.

The pipe 22B is a gas pipe connecting the fuel cell 24 and the tank 13. The pipe 22B guides the hydrogen gas stored in each tank 13 to the fuel cell 24. The pipe 22B has a plurality of branch portions 22B1 and a merging portion 22B2. The branch portions 22B1 are provided at one end (upstream end) of the pipe 22B. The number of these branch portions 22B1 provided is the same as the number of the tanks 13 (three in the illustrated example). One end (upstream end) of the branch portion 22B1 is connected to the tank 13. The other end (downstream end) of the branch portion 22B1 is connected to one end (upstream end) of the merging portion 22B2. The other end (downstream end) of the merging portion 22B2 is connected to the fuel cell 24. Therefore, the hydrogen gas released from each tank 13 flows through the branch portion 22B1, then merges at the merging portion 22B2, and is then guided to the fuel cell 24.

An on-off valve 76 is provided in each branch portion 22B1 of the pipe 22B. Each on-off valve 76 switches between release of the hydrogen gas in each tank 13 and stop (interruption) of the release. The pipe 22B is provided with a pressure reducing valve 77 and a main on-off valve 78. The pressure reducing valve 77 reduces pressure of the hydrogen gas released from the tank 13. The pressure of the hydrogen gas in the tank 13 is, for example, 35 megapascals or more, whereas the pressure of the hydrogen gas after being reduced by the pressure reducing valve 77 is, for example, about 2 atmospheres. The main on-off valve 78 switches between supply of the hydrogen gas reduced by the pressure reducing valve 77 to the fuel cell 24 and stop (interruption) of the supply. The on-off valves 76 and 78 are constituted by an electromagnetic valve actuated by a solenoid, an electric valve actuated by a motor, or the like.

A pressure sensor 81 is provided between the plurality of on-off valves 76 and the pressure reducing valve 77. The pressure sensor 81 detects the pressure of the hydrogen gas released from the plurality of tanks 13. The pressure detected by the pressure sensor 81 corresponds to the pressure of the hydrogen gas in the tank 13 releasing the hydrogen gas through the on-off valve 76. Each tank 13 is provided with a temperature sensor 82. The temperature sensor 82 detects a temperature of the hydrogen gas in the tank 13.

The pipe 22B (merging portion 22B2) is provided with a connector (joint) 22C. The pipe 22B has a portion on the tank unit 21 side and a portion on the fuel cell 24 side, and both portions are connected by the connector 22C. In other words, the pipe 22B can be separated into the tank unit 21 side and the fuel cell 24 side with the connector 22C interposed therebetween.

The hydrogen gas released from the tank 13 and flowing through the pipe 22B is supplied to the fuel cell 24. The fuel cell 24 is, for example, a battery module configured by arranging a plurality of single cells having a positive electrode and a negative electrode in a stacked state. The fuel cell 24 collects electric power generated by the single cells and generates electric power necessary for driving the electric motor 31.

The fuel cell 24 is connected to the second radiator 49 through a cooling flow path H2. The electrodes of the fuel cell 24 are adjusted to a predetermined temperature by a coolant circularly supplied from the second radiator 49. Thus, the fuel cell 24 can maintain high power generation efficiency.

The fuel cell 24 is electrically connected to an input side of the step-up circuit 61, and an output side of the step-up circuit 61 is electrically connected to a DC side of the inverter 62. The step-up circuit 61 increases a voltage input from the fuel cell 24, and outputs the voltage to the inverter 62 and the battery unit 30.

The inverter 62 is electrically connected to the motor 31. The inverter 62 converts a direct current input from the step-up circuit 61 into a three-phase alternating current and outputs the three-phase alternating current to the motor 31. Therefore, the electric power generated by the fuel cell 24 is boosted and converted into AC, and transmitted to the motor 31.

The motor 31 includes a rotor and a stator having a plurality of coils, and drives the output shaft with a predetermined torque and at a rotational speed. For example, only one motor 31 is mounted on the work vehicle 1, and the output shaft of the motor 31 is coupled to the transmission case 33. A plurality of the motors 31 may be mounted. For example, when two types of motors 31 for the front wheel 12A and the rear wheel 12B are provided, the power of the motors 31 can be respectively output to the front wheel 12A and the rear wheel 12B.

The power transmission mechanism of the transmission case 33 outputs all or a part of the power of the motor 31 to the traveling device 12. When operating the working device 335, the power transmission mechanism also outputs the power of the motor 31 to the PTO shaft 334.

The battery unit 30 is an electric storage device that absorbs load variation of the fuel cell 24. Specifically, the battery unit 30 temporarily charges the power supplied from the step-up circuit 61, discharges the power at the time of high load, and supplies driving power to the motor 31 to the inverter 62.

The battery unit 30 includes a battery pack 30A and a monitoring unit 30B. The battery pack 30A includes at least one cell. The cell is a charge-discharge type such as a lithium ion battery cell. An output voltage of the battery unit 30 is, for example, 24 V.

The monitoring unit 30B includes a processor that performs switching control of operation (charging or discharging) of the battery pack 30A and measurement of a state of charge (for example, SOC).

The work vehicle 1 includes a plurality of electrical components that operate at a voltage lower than that of the motor 31. These electrical components are supplied with DC power stepped down by a step-down circuit.

The plurality of electrical components includes, for example, an auxiliary battery 63, the radiators 48 and 49, and the air conditioner 50. The step-down circuit is, for example, the plurality of DC/DC converters 64 and 65 (hereinafter, also referred to as "first converter 64" and "second converter 65") having different output voltages.

The first converter 64 steps down the DC voltage input from the step-up circuit 61 to a first voltage (for example, 12 volts) and supplies the first voltage to the auxiliary battery 63, the air conditioner 50, and the like.

The second converter 65 steps down the DC voltage input from the step-up circuit 61 to a second voltage (for example, 24 volts) and supplies the second voltage to the radiators 48 and 49. The inverter 62 and the converters 64 and 65 are arranged in a portion of the chassis 41 corresponding to the driver's seat 15. Note that the second voltage of the second converter 65 may be supplied to the battery unit 30.

As described above, the first radiator 48 is disposed in front of the fuel cell 24, and the second radiator 49 is disposed behind the fuel cell 24 (see FIG. 2).

These radiators 48 and 49 constitute a cooling system that cools the electrical components such as the fuel cell 24, the step-up circuit 61, the inverter 62, the motor 31, and the first and second converters 64 and 65 with the coolant (refrigerant).

A cooling flow path H1 through which the coolant is circulated by a pump 66 is connected to the first radiator 48, and the coolant is cooled by heat exchange with outside air. The first radiator 48 includes a first fan 35 for promoting heat exchange with the outside air.

A cooling target of the cooling flow path H1 of the first radiator 48 is, for example, the electrical components (heat generating components) such as the step-up circuit 61, the inverter 62, the motor 31, and the first and second converters 64 and 65.

The cooling flow path H2 through which the coolant is circulated by a pump 67 is connected to the second radiator 49, and the coolant is cooled by heat exchange with the outside air. The second radiator 49 includes a second fan 36 for promoting heat exchange with the outside air.

The cooling target by the cooling flow path H2 of the second radiator 49 is, for example, the electrical component such as the fuel cell 24.

The auxiliary battery 63 is the power storage device that supplies power to a display, a communication device, and the like mounted on the driver's seat 15. The auxiliary battery 63 is, for example, a charge-discharge type lead-acid battery. The output voltage of the auxiliary battery (second battery) 63 is, for example, 12 V, and is lower than the output voltage (for example, 24 V) of the battery unit (first battery) 30.

The auxiliary battery 63 can also be used as an auxiliary power supply that supplies power to a control device 70 described later when the fuel cell 24 is stopped.

As illustrated in FIG. 9, the work vehicle 1 further includes the control device 70. The control device 70 can include, for example, an electronic control unit (ECU) that communicates with various electrical components according to a communication protocol such as a controller area network (CAN). For example, the control device 70 includes an ECU that integrally controls operation of the entire system from power generation by the fuel cell 24 to power output, and an ECU related to individual control of the tank unit 21 including the tank 13, the valves 75 to 78, and the sensors 81 and 82, and the like. Therefore, the control device 70 performs opening/closing control of the valves 76 to 78 included in the tank unit 21, acquisition of detection values of the pressure sensor 81 and the temperature sensor 82, processing of the acquired detection values, and the like.

### (Specific configuration of mounting frame 17)

The mounting frame 17 (see FIG. 7) is a member for mounting the tank 13 for storing hydrogen gas on the vehicle body 11. The mounting frame 17 is fixed to the vehicle body 11. Therefore, the vehicle body 11 includes first front support portions 51, second front support portions 53, and rear support portions 52 (see FIG. 3) as support portions of the mounting frame 17.

The first front support portions 51 (see FIG. 7) are located on the front side of the vehicle body 11 and on both sides in the left-right direction. The second front support portions 53 are located in front of the first front support portions 51 and on both sides of the vehicle body 11 in the left-right direction. The first front support portions 51 and the second front support portions 53 are beam-shaped members protruding from the front frame 32 to both sides in the left-right direction. The first front support portions 51 are arranged behind the front wheels 12A, and the second front support portions 53 are arranged in front of the front wheels 12A. The first front support portions 51 and the second front support portions 53 are arranged below upper ends of the front wheels 12A.

The transmission case 33 of the vehicle body 11 has axle cases 33A for the rear wheels 12B on both left and right sides of the rear portion. The rear support portions 52 (see FIG. 3) are constituted by plate-shaped brackets fixed on left and right axle cases 33A.

As illustrated in FIG. 7, the mounting frame 17 includes the ceiling frame 17A, a pair of left and right front pillars 17B1, a pair of left and right rear pillars 17B2, the pair of left and right reinforcing frames 17C, the base frame 17D, and the pair of left and right lower frames 17E.

The ceiling frame 17A is a rectangular frame made up of four straight members on the front, rear, left, and right. The ceiling frame 17A supports the tank 13. In the present embodiment, the case 21A of the tank 13 is attached to the ceiling frame 17A, and the tank 13 is housed inside the case 21A.

The front pillar 17B1 is formed of a linear member. Lower ends of the left and right front pillars 17B1 are respectively connected to the first front support portions 51 on the same left and right sides, and extend upward from the first front support portions 51. Upper ends of the left and right front pillars 17B1 are connected to both sides of a front portion of the ceiling frame 17A in the left-right direction. The front pillars 17B1 support the front portion of the ceiling frame 17A from below on both sides in the left-right direction.

The front pillar 17B1 has a coupling plate (coupling member) 18a at the upper end, and the ceiling frame 17A has a coupling plate (coupling member) 18b at a lower surface of the front portion. Both the coupling plates 18a and 18b are formed in a flat plate shape and overlapped with each other. Both the coupling plates 18a and 18b are detachably coupled by a coupling 20 including a bolt 20a penetrating therethrough and a nut 20b fastened to the bolt 20a. However, both the coupling plates 18a and 18b may be detachably coupled by a known coupling means such as a coupling pin penetrating therethrough or a lock fitting.

The pair of rear pillars 17B2 are formed of a linear member. Lower ends of the rear pillar 17B2 are connected to the base frame 17D. The rear pillars 17B2 extend upward from the base frame 17D. Upper ends of the rear pillars 17B2 are connected to both sides of a rear portion of the ceiling frame 17A in the left-right direction. The rear pillars 17B2 support the rear portion of the ceiling frame 17A from below on both left and right sides. The rear pillars 17B2 and the ceiling frame 17A are connected by a coupling including a bolt, a nut, or the like, welding, or the like.

As illustrated in FIG. 8, the base frame 17D is a linear member extending in the left-right direction. The base frame 17D is supported from below by the left and right lower frames 17E. The lower frame 17E is formed of a linear member. Lower ends of the left and right lower frames 17E are connected to left and right rear support portions 52 on the same left and right sides, and extend upward from the rear support portions 52.

The lower frame 17E has a coupling plate (coupling member) 18f at the upper end, and the base frame 17D has a coupling plate (coupling member) 18e at the lower surface. Both the coupling plates 18f and 18e are formed in a flat plate shape and overlapped with each other. Both the coupling plates 18f and 18e are detachably coupled by the coupling 20 including the bolt 20a penetrating therethrough and the nut 20b fastened to the bolt 20a. However, both the coupling plates 18f and 18e may be detachably coupled by a known coupling means such as a coupling pin penetrating therethrough or a lock fitting.

As illustrated in FIG. 7, the reinforcing frames 17C extend obliquely from the front end of the ceiling frame 17A to the front end of the front frame 32 of the vehicle body 11. Front ends (lower ends) of the reinforcing frames 17C are connected to the second front support portions 53. Rear ends (upper ends) of the reinforcing frames 17C are connected to both sides of the front portion of the ceiling frame 17A in the left-right direction.

The reinforcing frame 17C has a coupling plate (coupling member) 18d at the rear end, and the ceiling frame 17A also has a coupling plate (coupling member) 18c at the front end. Both the coupling plates 18d and 18c are formed in a flat plate shape and overlapped with each other. Both the coupling plates 18d and 18c are detachably coupled by the coupling 20 including the bolt 20a penetrating therethrough and the nut 20b fastened to the bolt 20a. However, both the coupling plates 18d and 18c may be detachably coupled by a known coupling means such as a coupling pin penetrating therethrough or a lock fitting.

The coupling plate 18d of the reinforcing frame 17C and the coupling plate 18a of the front pillar 17B1 may be coupled to each other or may be integrated. The rear end of the reinforcing frame 17C may be coupled to an upper portion of the front pillar 17B1 instead of the ceiling frame 17A. In this case, the rear end of the reinforcing frame 17C is not detachable from the upper portion of the front pillar 17B1, and may be fixed by welding or the like.

The front pillar 17B1 and the reinforcing frame 17C are fixed to the front frame 32, which is a part of the chassis 41, via the first front support portion 51 and the second front support portion 53. On the other hand, the rear pillar 17B2, the base frame 17D, and the lower frame 17E are fixed to the axle case 33A of the transmission case 33, which is the other portion of the chassis 41, via the rear support portion 52 (bracket).

The chassis 41 forms a framework for mounting the hood 34, the drive device 14, and the like, has a strong structure, and has high rigidity. The tank 13 is supported by such a chassis 41 via the mounting frame 17, and the work vehicle 1 can stably travel.

As illustrated in FIG. 7, the mounting frame 17 includes a pair of inclined frames 17F. The inclined frame 17F is formed of a linear member. The inclined frame 17F extends obliquely backward and upward from the front pillar 17B1 and is connected to the ceiling frame 17A. The inclined frame 17F increases the rigidity of the mounting frame 17 in the vehicle front-rear direction.

The inclined frame 17F has a coupling plate 18g at the upper end, and the ceiling frame 17A has a coupling plate 18h at the lower surface. Both the coupling plates 18g and 18h are formed in a flat plate shape and overlapped with each other. Both the coupling plates 18g and 18h are detachably coupled by the coupling including the bolt penetrating therethrough and the nut fastened to the bolt. However, both the coupling plates 18g and 18h may be detachably coupled by a known coupling means such as a coupling pin penetrating therethrough or a lock fitting.

As illustrated in FIG. 1, the ceiling frame 17A is positioned above the hood 34 and the cover 111 of the vehicle body 11. The ceiling frame 17A is positioned above the driver's seat 15 and the cabin 16 mounted on the vehicle body 11. The front end of the ceiling frame 17A is positioned in front of the driver's seat 15 (cabin 16). The front end of the ceiling frame 17A is positioned the above cover 111. The front end of the ceiling frame 17A is positioned behind the hood 34. The coupling portions (coupling plates 18a to 18d) between the ceiling frame 17A and the front pillars 17B1 and the reinforcing frames 17C are positioned above the hood 34, the cover 111, the driver's seat 15, and the cabin 16, and positioned in front of the driver's seat 15 and the cabin 16. The coupling portions 18a to 18d are positioned above the cover 111 and behind the hood 34.

As illustrated in FIG. 1 and FIG. 4, the base frame 17D is positioned behind the driver's seat 15 (cabin 16). The base frame 17D is positioned above the fender 47 and the rear wheels 12B. The base frame 17D is positioned behind an axle of the rear wheel 12B and in front of a rear end of the rear wheel 12B. The coupling portions (coupling plates 18e and 18f) between the base frame 17D and the lower frame 17E are positioned behind the driver's seat 15 (cabin 16) and above the fender 47 and the rear wheels 12B. The coupling portions (coupling plates 18e and 18f) between the base frame 17D and the lower frame 17E are positioned behind the axle of the rear wheel 12B and in front of the rear end of the rear wheel 12B.

### (Arrangement of pipe)

As illustrated in FIG. 5 and FIG. 9, the pipe 22 includes the pipe 22B (hereinafter, also referred to as "front pipe") connecting the tank 13 and the fuel cell 24, and the pipe 22A (hereinafter, also referred to as "rear pipe") connecting the tank 13 and the filling port 26. The front pipe 22B is drawn out from a bottom surface on a front portion side of the case 21A in the tank unit 21, and is connected to the fuel cell 24. The rear pipe 22A is drawn out from a rear surface of the case 21A, and is connected to the filling port 26 (see FIG. 8).

As illustrated in FIG. 1 and FIG. 5, the front pipe 22B is disposed along one (left) of the left and right front pillars 17B1 of the mounting frame 17 and one (left) of the left and right inclined frames 17F, and is attached to the front pillar 17B1 and the inclined frame 17F using a mounting tool such as a clamp member or a band. As illustrated in FIG. 1 and FIG. 4, the rear pipe 22A is disposed along one (right) of the rear pillars 17B2, and is attached to the rear pillar 17B2 using a mounting tool such as a clamp member or a band. Therefore, the ceiling frame 17A of the mounting frame 17 is used as a member for mounting the tank unit 21, the front pillar 17B1 and the inclined frame 17F of the mounting frame 17 are used as members for mounting the front pipe 22B, and the rear pillar 17B2 of the mounting frame 17 is used as a member for mounting the rear pipe 22A.

Note that each member constituting the mounting frame 17 is a hollow tubular member. Therefore, the pipe 22 may be attached to the mounting frame 17 by being entirely or partially passed through the tubular member.

The base frame 17D of the mounting frame 17 is used as a member for mounting the filling unit 25 (filling port 26). Therefore, the ceiling frame 17A, the rear pillar 17B2, and the base frame 17D of the mounting frame 17 constitute an installation frame 19 for mounting the tank unit 21, the rear pipe 22A, and the filling unit 25.

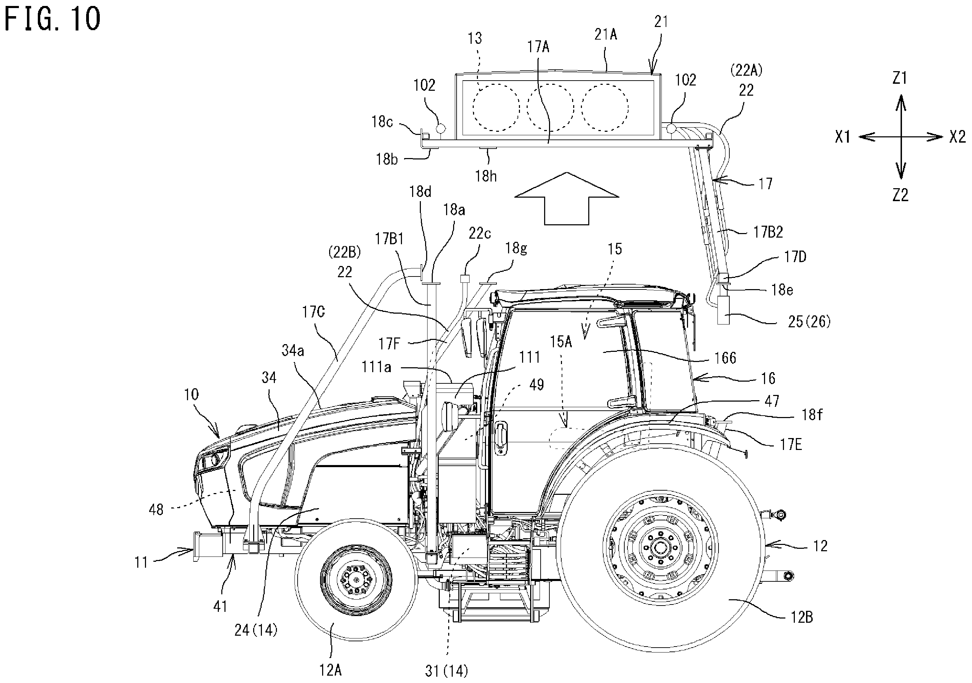

As illustrated in FIG. 7, the coupling plates 18b, 18c, 18e, and 18h of the installation frame 19 (17A, 17B2, and 17D) can be attached to and detached from the coupling plates 18a, 18d, 18f, and 18g of other members 17B1, 17C, and 17E of the mounting frame 17. Therefore, as illustrated in FIG. 10, the installation frame 19 can be detached from the vehicle body 11. The tank unit 21, the rear pipe (supply pipe) 22B, and the filling port 26 mounted on the installation frame 19 can also be removed from vehicle body 11 together with the installation frame 19.

The tank 13 of the tank unit 21 requires periodic inspection and maintenance, and may need to be replaced due to failure or aging. Therefore, the tank 13 may be detached from or attached to the vehicle body 11 of the work vehicle 1. However, the tank 13 is connected to accessories such as the pipe 22 and the valves 75 to 78, and in a case where only the tank 13 is detached from or attached to the vehicle body 11, it is necessary to attach or detach these accessory devices to or from the tank 13, and the work is very complicated. In particular, since high-pressure hydrogen gas flows from the filling port 26 toward the tank 13 through the rear pipe 22A, it is necessary to provide a sufficient seal for preventing leakage when the rear pipe 22A removed from the tank 13 is attached to the tank 13 again.

In the present embodiment, the tank unit 21, the rear pipe 22A, and the filling unit 25 (filling port) 26 are attached to the installation frame 19, and these components can be detached from the vehicle body 11 together with the installation frame 19. Therefore, the work can be easily performed as compared with the case where only the tank 13 is detached from the vehicle body 11.

The front pipe 22B of the pipe 22 can be separated into the fuel cell 24 side and the tank unit 21 side by the connector 22C. Therefore, even if the installation frame 19 is removed from the vehicle body 11, together with the front pillar 17B1 and the inclined frame 17F, the front pipe 22B attached thereto can be left on the vehicle body 11 side. In addition, since the hydrogen gas after being reduced by the pressure reducing valve 77 flows through the front pipe 22B, possibility of leakage of the hydrogen gas is lower than that of the rear pipe 22A. Therefore, even if the front pipe 22B is configured to be detachable from the tank unit 21 via the connector 22C, there are few problems.

In the mounting frame 17, the installation frame 19 and other members (the front pillar 17B1, the reinforcing frame 17C, the inclined frame 17F, the lower frame 17E) left on the vehicle body 11 side are connected to each other in front of or behind the driver's seat 15 (cabin 16). That is, a front portion of the installation frame 19 is connected to the vehicle body 11 side in front of the driver's seat 15 (cabin 16), and a rear portion of the installation frame 19 is connected to the vehicle body 11 side behind the driver's seat 15 (cabin 16).

In the mounting frame 17, the installation frame 19 and other members (the front pillar 17B1, the reinforcing frame 17C, the inclined frame 17F) left on the front portion side of the vehicle body 11 are connected above the driver's seat 15 (cabin 16), and the installation frame 19 and another member (the lower frame 17E) left on the rear portion side of the vehicle body 11 are connected above the fender 47 and the rear wheels 12B. That is, the front portion of the installation frame 19 is connected to the vehicle body 11 side above the driver's seat 15 (cabin 16), and the rear portion of the installation frame 19 is connected to the vehicle body 11 side above the fender 47 and the rear wheels 12B. As described above, the work of removing and attaching the installation frame 19 can be easily performed without being hindered by the driver's seat 15 (cabin 16), the fender 47, the rear wheel 12B, and the like.

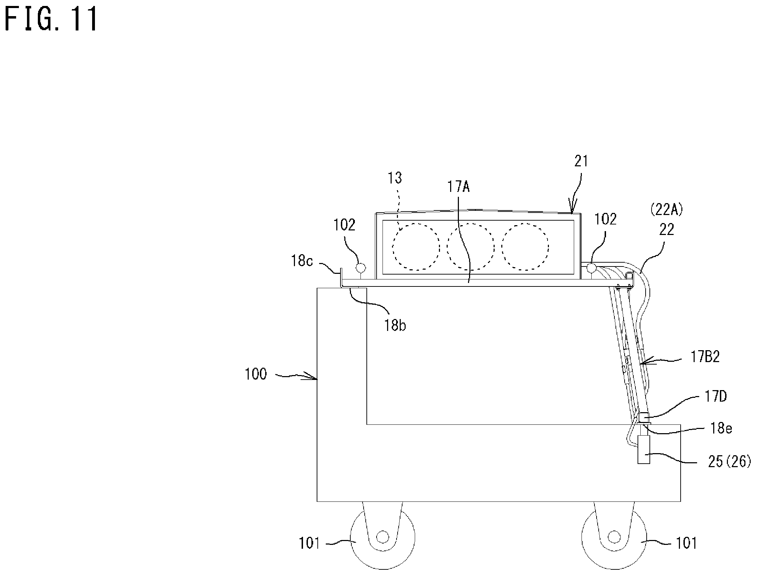

The installation frame 19 can be lifted and removed from the vehicle body 11 using a moving device such as a crane. The installation frame 19 may be provided with a hanging fitting 102 (see FIG. 10) such as an eye bolt or an eye nut for connecting the moving device. For example, as illustrated in FIG. 11, the installation frame 19 removed from the vehicle body 11 may be remounted on a platform 100 that supports the ceiling frame 17A and the base frame 17D from below. By using such a platform 100, it is possible to support the installation frame 19 while maintaining its posture, and to move the installation frame 19 via wheels 101.

The installation frame 19 is disposed above and behind the driver's seat 15 (cabin 16), and the tank 13 (tank unit 21), the rear pipe 22A, and the filling port 26 (filling unit 25) are arranged above or behind the driver's seat 15 (cabin 16). Therefore, the installation frame 19 can be removed from the vehicle body 11 toward the upper or rear of the driver's seat 15 (cabin 16), where a relatively large detachment space can be secured, and conversely, the installation frame 19 can be attached to the vehicle body 11 from the upper or rear of the driver's seat 15 (cabin 16).

### (Other modifications)

The embodiment disclosed herein is illustrative in all respects and is not restrictive. The scope of rights of the present disclosure is not limited to the above-described embodiment, and includes all modifications within the scope equivalent to the configurations described in the claims.

In the above embodiment, the tank unit 21, the rear pipe 22A, and the filling unit 25 are configured to be detachable from the vehicle body 11 together with the installation frame 19, but the front pipe 22B may also be configured to be detachable together with the installation frame 19. In this case, in the mounting frame 17, the front pillar 17B1 and the inclined frame 17F to which the front pipe 22B is attached can also be configured to be detachable from the vehicle body 11 (particularly, the first front support portion 51) together with the ceiling frame 17A, the rear pillar 17B2, and the base frame 17D. Alternatively, the entire mounting frame 17 including the reinforcing frame 17C and the lower frame 17E can be configured to be detachable from the vehicle body 11.

As another embodiment, the fuel cell 24 can be mounted on a frame integrally connected to the mounting frame 17, and the fuel cell 24 can also be configured to be detachable from the vehicle body 11 together with the tank 13, the pipe 22, and the filling unit 25.

Note that the reference signs used in this chapter 1 are used only in this chapter 1, and are not related to the reference signs of other chapters.

### REFERENCE SIGNS LIST

- 1: work vehicle
- 11: vehicle body
- 13: tank
- 15: driver's seat
- 19: installation frame
- 21A: case
- 22A: rear pipe (supply pipe)
- 24: fuel cell
- 26: filling port
- 75: check valve
- 76: on-off valve
- 77: pressure reducing valve
- 78: main on-off valve

### <Chapter 2>

Next, a preferred embodiment of the present disclosure in Chapter 2 will be described.

### [Background art]

PATENT LITERATURE 1 (Japanese Laid-Open Patent Publication No. 2023-13186) describes a work vehicle (for example, an agricultural tractor) including a tank for storing hydrogen gas, a fuel cell, and a motor.

The fuel cell generates electric power from hydrogen gas supplied from the tank, and the motor rotates by the electric power supplied from the fuel cell. Therefore, the work vehicle can travel by rotating drive wheels using rotation of the motor as a driving force.

### [Problems to be solved by the present disclosure]

The agricultural tractor exemplified in PATENT LITERATURE 1 employs a mounting structure in which the tank is disposed in an upper portion of an internal space of a cabin.

Therefore, in PATENT LITERATURE 1, for example, when a mounting frame for mounting the tank on an exterior side of the cabin is employed, it is not assumed how to support the mounting frame on a vehicle body in a manner that is appropriate in terms of manufacturing cost and the like.

In view of such conventional problems, an object of the present disclosure in Chapter 2 is to provide a work vehicle capable of appropriately supporting the mounting frame of the tank on the vehicle body.

### [Outline of embodiment of the present disclosure]

Hereinafter, an outline of an embodiment of the present disclosure in Chapter 2 will be listed and described.
(1) A work vehicle according to the present embodiment includes a vehicle body, a fuel cell attached to the vehicle body, a tank that supplies hydrogen to the fuel cell, a mounting frame that supports the tank, a cabin constituting a partitioned driver's cabin, and a support mechanism for supporting the cabin on the vehicle body, in which the support mechanism further supports the mounting frame.

According to the work vehicle of the present embodiment, since the support mechanism for supporting the cabin on the vehicle body further supports the mounting frame, it is not necessary to separately provide a support mechanism for supporting only the mounting frame on the vehicle body, and the number of components and the time and effort for manufacturing can be reduced.

Therefore, according to the work vehicle of the present embodiment, the mounting frame of the tank can be supported on the vehicle body in an appropriate mode from the viewpoint of the manufacturing cost.

(2) In the work vehicle of the above-described (1), the mounting frame may support the tank above the cabin.

In this way, it is possible to secure an arrangement space of the tank having a sufficient volume in a place that does not interfere with the operator getting on and off the vehicle.

(3) In the work vehicle of the above-described (1) or (2), the support mechanism may include: a support member including a first support portion that supports the cabin and a second support portion that supports the mounting frame at a position away from the first support portion; and a reinforcing member that increases bending moment resistance of the second support portion.

In this case, since the first support portion and the second support portion are located away from each other, a sufficient area for supporting both the cabin and the mounting frame can be secured.

Further, since the reinforcing member increases the bending moment resistance of the second support portion, even if an area of the support member is expanded by providing the second support portion, a support force of the mounting frame by the support member can be increased.

(4) In the work vehicle of the above-described (3), the vehicle body may have a wheel support body (for example, a support tubular body protruding from the transmission case) that supports the wheel, and the first support portion may be attached to the wheel support body.

In this way, since the first support portion is attached to the wheel support body which is a frame element of the vehicle body, the first support portion can be firmly fixed to the vehicle body.

(5) In the work vehicle of the above-described (4), the reinforcing member may include a first reinforcing portion attached to a lower surface of the second support portion, a second reinforcing portion extending downward from a lower surface or a side surface of the wheel support body, and a coupling part that couples the first reinforcing portion and the second reinforcing portion to each other.

In this way, since a bending moment generated in the second support portion can be offset by the first reinforcing portion and the second reinforcing portion, a support force of the second support portion can be effectively secured.

(6) In the work vehicle of the above-described (4), the work vehicle may further include a coupling device for coupling the working device, and the second reinforcing portion may be capable of attaching a tension member for towing the coupling device.

In this way, a component force of the traction force from the tension member is added to a reaction force of the first reinforcing portion, and a bending moment for offsetting the bending moment of the second support portion increases. Therefore, the support force of the second support portion can be more effectively secured.

### [Details of embodiment of the present disclosure]

Hereinafter, the embodiment of the present disclosure in Chapter 2 will be described in detail with reference to the drawings. Note that at least a part of components of the embodiment described below in Chapter 2 may be arbitrarily combined.

### (Overall structure of work vehicle)

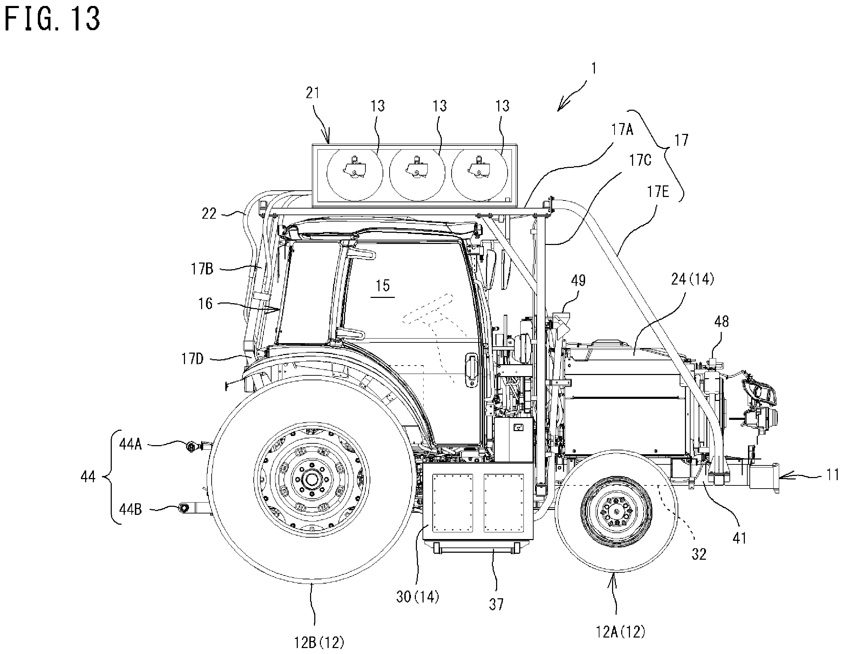

FIG. 12 is a perspective view illustrating an example of an overall structure of the work vehicle 1 in Chapter 2. FIG. 13 is a right side view of the work vehicle 1 from which a part (such as the hood 34 and a cover 51) of exterior components is removed.

As illustrated in FIG. 12 and FIG. 13, the work vehicle 1 is a vehicle used for farmwork, specifically, a tractor. However, the work vehicle 1 is not limited to the tractor, and may be a moving vehicle such as an agricultural machine, a construction machine, or a utility vehicle.

The work vehicle 1 includes a vehicle body 11, a traveling device 12 that supports the vehicle body 11, a driver's seat 15, a cabin 16, and the like. The vehicle body 11 includes a chassis 41, a hood 34, a cover 51, a cabin 16, a fender for a rear wheel 12B, and the like.

Specifically, the hood 34 and the cover 51 are mounted on the chassis 41 of the vehicle body 11 in order from the front portion to the rear portion, and the cabin 16 is disposed behind the cover 51.

The work vehicle 1 further includes a tank unit 21 having a plurality of tanks 13 (see FIG. 13) for storing fuel therein, and a drive device 14 driven by the stored fuel. The fuel is liquid or gas, and is hydrogen, methane, carbon monoxide (CO), or the like. In this embodiment, the tank 13 stores hydrogen gas. Therefore, the work vehicle 1 is a fuel cell vehicle (FCV), and travels using electric power generated by a chemical reaction between hydrogen and oxygen by a fuel cell 24 as an energy source. The fuel cell 24 generates electric power by hydrogen. The fuel cell 24 may generate electric power by methane or carbon monoxide (CO).

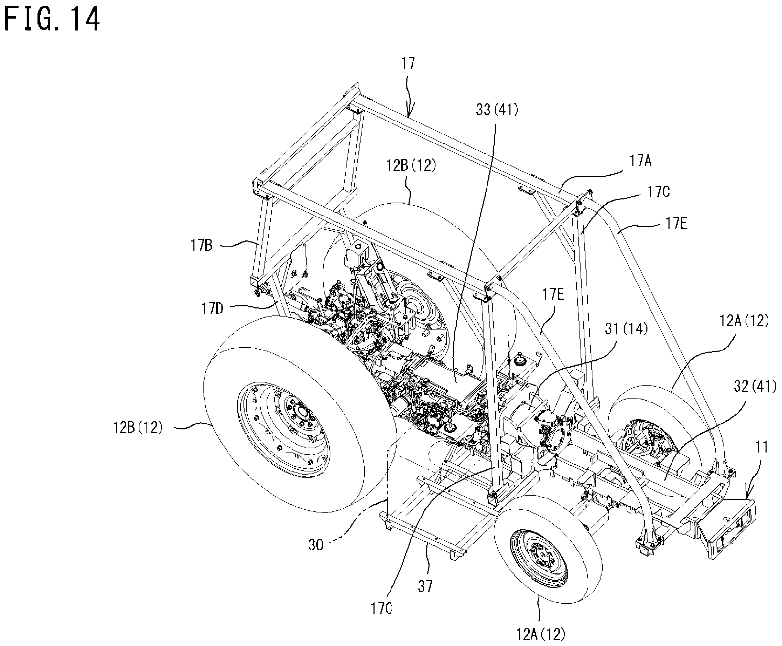

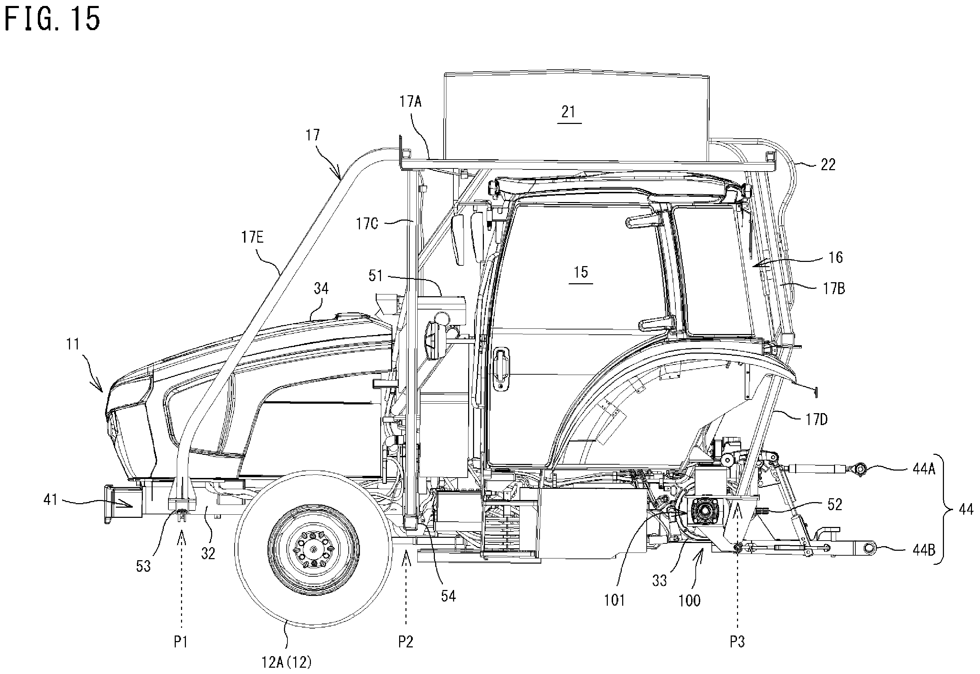

The drive device 14 includes the fuel cell 24, a battery unit 30, and an electric motor 31 (see FIG. 14: hereinafter, also referred to as "motor 31"). The battery unit 30 incorporates at least one battery pack 30A (see FIG. 15) that stores output power of the fuel cell 24.

The work vehicle 1 includes a hydrogen gas pipe 22. The hydrogen gas is supplied from a gas filling port (not illustrated) connected to an end portion of the pipe 22 and is filled in each tank 13. The hydrogen gas in the tank 13 is supplied to the fuel cell 24 through the pipe 22.

The cabin 16 is a box structure forming a partitioned driver's cabin, and has a front pillar, a rear pillar, and a roof. The front pillars are arranged on the left and right on the front side of the driver's seat 15, and the rear pillars are arranged on the left and right on the rear side of the driver's seat 15.

The work vehicle 1 may have a canopy or a rollover protective structure (ROPS) instead of the cabin 16. When the work vehicle 1 is not mounted with the cabin 16, the tank unit 21 is disposed above the driver's seat 15 by a mounting frame 17 to be described later.

The traveling device 12 includes front wheels 12A and rear wheels 12B. These are all arranged bilaterally symmetrically with respect to the vehicle body 11. One or both of the front wheel 12A and the rear wheel 12B are rotated by power of the motor 31.

One or both (drive wheels) of the wheels 12A and 12B rotated by the power of the motor 31 may be crawlers (caterpillars).

As illustrated in FIG. 13, a first radiator 48, a fuel cell 24, and a second radiator 49 are mounted on a portion of the chassis 41 corresponding to the front wheel 12A in order from a front side to a rear side. The first radiator 48 and the fuel cell 24 are covered with the hood 34, and the second radiator 49 is covered with the cover 51.

As illustrated in FIG. 12, an upper surface of the cover 51 is higher than an uppermost end of the hood 34 but lower than an uppermost end of a steering wheel of the driver's seat 15.

A rear end portion of the hood 34 is located lower than the cover 51, and an upper surface of the hood 34 is formed in a tapered shape gradually being lowered from the rear end portion toward a front end portion thereof. Therefore, a forward visibility from an operator sitting on the driver's seat 15 is not easily obstructed.

### (Internal structure of work vehicle)

FIG. 14 is a perspective view illustrating an example of an internal structure of the work vehicle 1.

As illustrated in FIG. 14, the chassis 41 constituting the vehicle body 11 is formed of a steel frame having a shape elongated in a front-rear direction, and includes a front frame 32 and a transmission case 33.

The transmission case 33 is connected to a rear portion of the front frame 32, and a framework of the vehicle body 11 is formed by the transmission case 33 and the front frame 32.

A mounting frame 17 for disposing the tank unit 21 above the cabin 16 is connected to the chassis 41 of the vehicle body 11.

The mounting frame 17 includes a substantially rectangular ceiling frame 17A elongated in the front-rear direction, a rear frame 17B supporting a rear end of the ceiling frame 17A, a front pillar 17C supporting a front end of the ceiling frame 17A, and a rear pillar 17D supporting the rear frame 17B. The tank unit 21 is connected to the ceiling frame 17A in a laterally placed state.

As illustrated in FIG. 13, the ceiling frame 17A is positioned higher than the roof of the cabin 16. Accordingly, the tank unit 21 is disposed above the roof of the cabin 16.

The mounting frame 17 further includes a reinforcing frame 17E. The reinforcing frame 17E is a reinforcing diagonal member inclined downward toward the front. An upper end portion of the reinforcing frame 17E is connected to a front end portion of the ceiling frame 17A, and a lower end portion of the reinforcing frame 17E is connected to a front end portion of the chassis 41. A more detailed support structure of the mounting frame 17 will be described later.

A support frame 37 for supporting the battery unit 30 is connected to the chassis 41 of the vehicle body 11.

Specifically, the motor 31 is mounted on the front frame 32 of the chassis 41, and the support frame 37 is attached to a portion of the front frame 32 corresponding to the motor 31. The support frame 37 is made of, for example, a metal frame member, and is attached in a cantilevered state so as to protrude rightward from the front frame 32.

The transmission case 33 located behind the motor 31 has a power transmission mechanism therein. The power transmission mechanism includes a transmission, a clutch, and a differential gear, and decelerates or accelerates rotation of an output shaft of the motor 31 to transmit the rotation to the traveling device 12.

The power transmission mechanism inside the transmission case 33 includes a branch mechanism that outputs a part of the power of the motor 31 to a PTO shaft 52 (see FIG. 15). The PTO shaft 52 is an output shaft protruding rearward from the transmission case 33.

A coupling device 44 (see FIG. 15) configured by, for example, a three-point link mechanism for coupling a working device (also referred to as "implement") for performing desired farmwork to a rear of the vehicle body 11 is attached to the transmission case 33.

The coupling device 44 including the three-point link mechanism can include, for example, an upper arm 44A protruding rearward from the transmission case 33 and a pair of left and right lower arms 44B. The working device is, for example, a cultivator, a baler, or the like.

Rotational movement of the PTO shaft 52 is transmitted to an input shaft of the working device coupled to the coupling device 44, for example, during driving of the traveling device 12. Therefore, the work vehicle 1 can drive the working device by the power of the motor 31 while traveling in a field or the like.

### (Support structure of mounting frame)

FIG. 15 is a left side view of the work vehicle 1 from which the rear wheels 12B are removed.

As illustrated in FIG. 15, the mounting frame 17 supporting the tank unit 21 is coupled to the chassis 41 at the following three types of coupling positions in the front-rear direction, and the coupling positions are bilaterally symmetrical. Therefore, the mounting frame 17 is supported by the chassis 41 of the vehicle body 11 at a total of six locations.

First position P1: A position where the reinforcing frame 17E of the mounting frame 17 is connected to the front end portion of the chassis 41 (for example, a front portion of the front frame 32)

Second position P2: A position where the front pillar 17C of the mounting frame 17 is connected to an intermediate portion of the chassis 41 (for example, the rear portion of front frame 32)

Third position P3: A position where the rear pillar 17D of the mounting frame 17 is connected to a rear end portion of the chassis 41 (for example, a wheel support body 101 of the transmission case 33)

Specifically, a front bracket 53 is provided to protrude from the first position P1 of the front frame 32, and a lower end flange of the reinforcing frame 17E is bolted to the front bracket 53.

An intermediate bracket 54 is provided to protrude from the second position P2 of the front frame 32, and a lower end flange of the front pillar 17C is bolted to the intermediate bracket 54.

On the other hand, a support mechanism 100 for supporting the cabin 16 by the chassis 41 of the vehicle body 11 is formed in the transmission case 33.

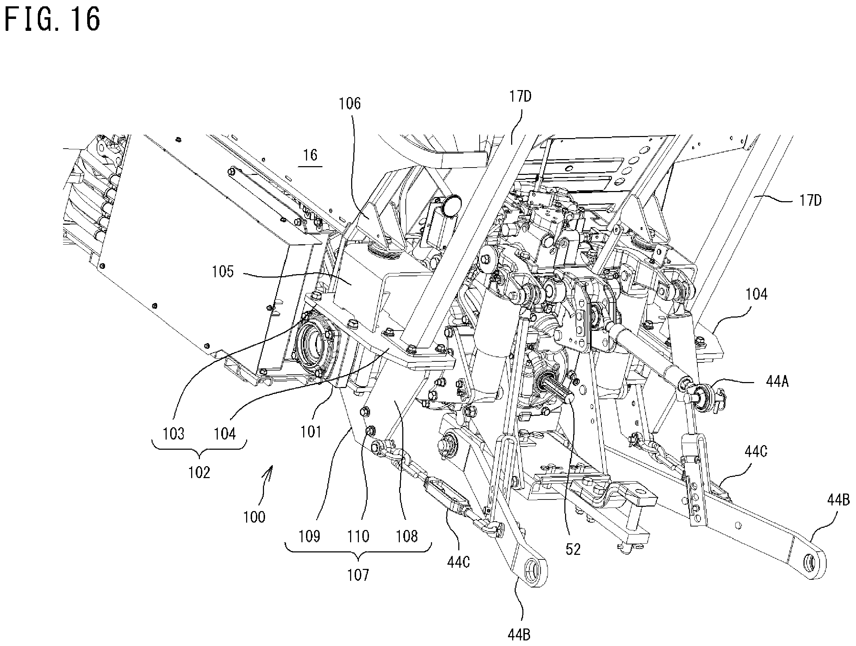

The support mechanism 100 is structured to support both the cabin 16 and the mounting frame 17, and a lower end flange of the rear pillar 17D of the mounting frame 17 is bolted to a component of the support mechanism 100. Hereinafter, a specific example of the support mechanism 100 will be described with reference to FIG. 16.

### (Specific example of support mechanism)

FIG. 16 is a perspective view of a rear portion of the vehicle body of the work vehicle 1 from which the rear wheels 12B are removed.

As illustrated in FIG. 16, the support mechanism 100 includes the wheel support body 101, which is a kind of component of the chassis 41, and a support member 102 attached to the wheel support body 101. The wheel support body 101 is, for example, a support tubular body integrally formed with the transmission case 33. A drive shaft of the rear wheels 12B is rotatably housed inside the support tubular body.

The support member 102 is, for example, a steel mounting bracket longer than the wheel support body 101 in the front-rear direction, and both the cabin 16 and the mounting frame 17 are supported by the chassis 41 via the support member 102.

That is, the support member 102 includes a first support portion 103 that is a portion that supports the cabin 16 and a second support portion 104 that is a portion that supports the mounting frame 17.

Among the support portions 103 and 104, the first support portion 103 is attached to the wheel support body 101 by bolt fastening or the like.

A support fitting 105 having a U-shaped cross-section is fixed to an upper surface of the first support portion 103 by welding or the like, and a mounting stay 106 protruding from a lower portion of a rear surface of the cabin 16 is fastened to an upper surface of the support fitting 105 with bolts. In this manner, the cabin 16 is supported by the wheel support body 101 via the mounting stay 106, the support fitting 105, and the first support portion 103.

Among the support portions 103 and 104, the second support portion 104 is formed of a plate material protruding rearward from the first support portion 103 in a cantilever manner.

The rear pillar 17D of the mounting frame 17 is fixed to an upper surface of the second support portion 104. This fixing is performed, for example, by bolting the lower end flange of the rear pillar 17D to the second support portion 104.

As described above, since the second support portion 104 is made of a plate material protruding rearward from the first support portion 103 in a cantilever manner, a downward bending moment based on an axial force of the rear pillar 17D is normally generated at a root portion of the second support portion 104.

Therefore, there is a concern that the second support portion 104 may be bent downward due to vibration in the vertical direction in field work, or may be broken due to aged deterioration. Therefore, the support mechanism 100 includes a reinforcing member 107 that increases the bending moment resistance of the second support portion 104.

As illustrated in FIG. 16, the reinforcing member 107 is a member also having a function of connecting the second support portion 104 to the wheel support body 101.

Specifically, the reinforcing member 107 includes a first reinforcing portion 108 attached to the lower surface of the second support portion 104, a second reinforcing portion 109 extending downward from the lower surface of the wheel support body 101, and a coupling part 110 that couples the first reinforcing portion 108 and the second reinforcing portion 109 to each other. Note that the second reinforcing portion 109 may be a member extending downward from the side surface of the wheel support body 101.

The first reinforcing portion 108 is made of a steel plate material that protrudes downward in a state of being inclined forward from the lower surface of the second support portion 104. A protruding direction of the first reinforcing portion 108 is, for example, a direction substantially parallel to the rear pillar 17D.

The second reinforcing portion 109 is made of a steel plate material that protrudes downward in a state of being inclined rearward from the lower surface or the side surface of the wheel support body 101. An inclination degree of the second reinforcing portion 109 is set to such an extent that an overlapping portion with a tip end portion of the first reinforcing portion 108 can be generated.

The coupling part 110 is a member that couples overlapping portions of the first reinforcing portion 108 and the second reinforcing portion 109, and is made of, for example, a bolt and a nut that pass through the overlapping portions and tighten the bolt.

However, the coupling part 110 is not limited to the bolt and the nut described above, and may be a portion that couples the overlapping portions by other fixing methods such as arc welding or welding. In addition, the first reinforcing portion 108 and the second reinforcing portion 109 may be formed of one steel plate material formed in a substantially V-shape. In this case, a bent portion of the V-shaped steel member corresponds to the coupling part 110.

The coupling device (three-point link mechanism) 44 further includes a tension member 44C that can be adjusted in length and applies tension to the lower arm 44B. The tension member 44C is made of, for example, a turnbuckle.

A front end portion of the tension member 44C is connected to a rear end portion of the second reinforcing portion 109, and a rear end portion of the tension member 44C is connected to an intermediate portion of the lower arm 44B. Therefore, the second reinforcing portion 109 also has a function as an attachment portion of the tension member 44C of the coupling device 44.

### (Mechanical characteristics of support mechanism)

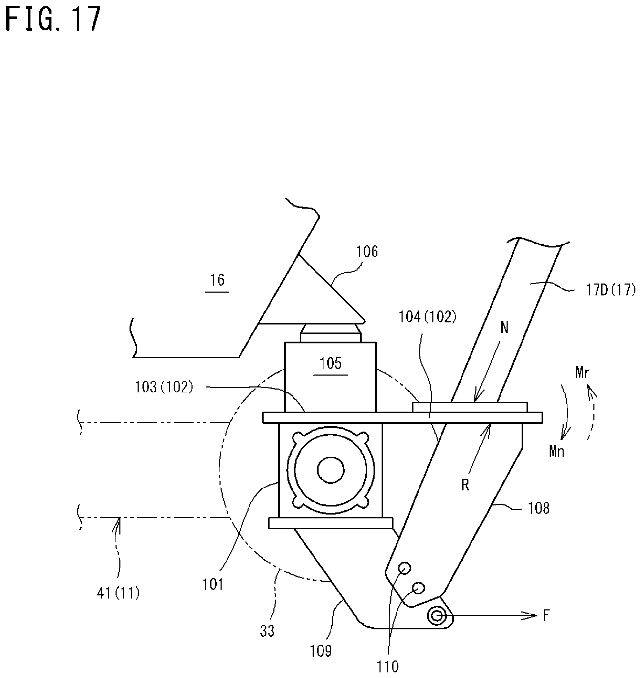

FIG. 17 is an explanatory view illustrating an example of mechanical characteristics of the support mechanism 100.

Meanings of parameters illustrated in FIG. 17 are as follows.
N: Axial force applied from rear pillar 17D to second support portion 104
R: Reaction force applied from first reinforcing portion 108 to second support portion 104
F: Traction force acting on second reinforcing portion 109 from tension member 44C
Mn: Bending moment (downward) generated in second support portion 104 by axial force N
Mr: Bending moment (upward) generated in second support portion 104 by reaction force R

As illustrated in FIG. 17, when the second support portion 104 is a cantilever member protruding rearward, a downward bending moment Mn associated with the axial force N is generated in the second support portion 104, but the bending moment Mn is offset by an upward bending moment Mr associated with the reaction force R.

Therefore, although the second support portion 104 that supports the rear pillar 17D is formed of the cantilever member, the support force of the second support portion 104 can be effectively secured.

When the second support portion 104 receives a traction force F from the tension member 44C, the component force of the traction force F is added to the reaction force R, and the upward bending moment Mr for offsetting the bending moment Mn increases. Therefore, the support force of the second support portion 104 can be more effectively secured.

### (Other modifications)

The embodiment disclosed herein is illustrative in all respects and is not restrictive. The scope of rights of the present disclosure is not limited to the above-described embodiment, and includes all modifications within the scope equivalent to the configurations described in the claims.

For example, in the above-described embodiment, a case where the tank unit 21 is mounted on the mounting frame 17 has been exemplified, but at least one tank (hydrogen tank) 13 that is not unitized may be mounted on the mounting frame 17.

### REFERENCE SIGNS LIST

- 1: work vehicle
- 11: vehicle body
- 12: traveling device
- 12A: front wheel
- 12B: rear wheel
- 13: tank (hydrogen tank)
- 14: drive device
- 15: driver's seat
- 16: cabin
- 17: mounting frame
- 17A: ceiling frame
- 17B: rear frame
- 17C: front pillar
- 17D: rear pillar
- 17E: reinforcing frame
- 21: tank unit
- 22: pipe
- 24: fuel cell
- 30: battery unit
- 30A: battery pack
- 31: motor (electric motor)
- 32: front frame
- 33: transmission case
- 34: hood
- 37: support frame
- 41: chassis
- 44: coupling device
- 44A: upper arm
- 44B: lower arm
- 44C: tension member
- 48: first radiator
- 49: second radiator
- 51: cover
- 53: front bracket
- 54: intermediate bracket
- 100: support mechanism
- 101: wheel support body
- 102: support member
- 103: first support portion
- 104: second support portion
- 105: support fitting
- 106: mounting stay
- 107: reinforcing member
- 108: first reinforcing portion
- 109: second reinforcing portion
- 110: coupling part

## Claims

1. A work vehicle comprising:
a vehicle body;
a fuel cell mounted on the vehicle body;
a tank that stores fuel to be supplied to the fuel cell;
a supply pipe connected to the tank and for supplying fuel to the tank; and
a frame attached with the tank and the supply pipe and detachable from the vehicle body.

2. The work vehicle according to claim 1, comprising a filling port detachable from the vehicle body together with the frame.

3. The work vehicle according to claim 1 or 2, comprising a valve connected to the supply pipe or the tank and detachable from the vehicle body together with the frame.

4. The work vehicle according to any one of claims 1 to 3, comprising a case that houses the tank and is detachable from the vehicle body together with the frame.

5. The work vehicle according to any one of claims 1 to 4, comprising a driver's seat on the vehicle body,
wherein the frame disposes the tank above the driver's seat.
